# EUROPÄISCHE PATENTSCHRIFT

(11) **EP 1 528 695 B1**
(45) Veröffentlichungstag und Bekanntmachung des Hinweises auf die Patenterteilung: **14.11.2007**
(21) Anmeldenummer: 04025520.0
(22) Anmeldetag: 27.10.2004
(51) Int. Cl.: H04B 10/00, F15B 13/00

(54) **Elektrische Steuereinrichtung**
Electrical control device
Dispositif de commande électrique

(30) Priorität: 31.10.2003 DE 10351328; 14.11.2003 DE 10353295
(43) Veröffentlichungstag der Anmeldung: 04.05.2005
(73) Patentinhaber: Norgren GmbH, 70736 Fellbach (DE)
(72) Erfinder: Sielemann, Ulrich, 70192 Stuttgart (DE); Quast, Erhard, 51598 Friesenhagen (DE)
(74) Vertreter: Jakelski, Joachim

(56) Entgegenhaltungen:
- EP-A- 1 002 961
- WO-A-01/78265

## Beschreibung

Die Erfindung betrifft eine Steuereinrichtung nach dem Oberbegriff des Anspruchs 1.

Solche modulartig aufgebauten elektrischen Steuereinrichtungen werden in den unterschiedlichsten Gebieten der Technik, beispielsweise in der Gebäudetechnik oder bei pneumatischen oder hydraulischen Vorrichtungen eingesetzt.

Sie finden zum Beispiel Anwendung bei modulartig aufgebauten Ventilstationen, bei denen mehrere Ventilblöcke miteinander verbunden sind. Eine pneumatische oder hydraulische Ventileinheit mit einem wenigstens einen elektromagnetischen Betätigungsblock tragenden Ventilblock geht beispielsweise aus der DE 39 10 913 A1 hervor. Der Ventilblock ist mit einem Anschlußblock verbindbar, der Mittel zum Verbinden mit weiteren Anschlußblökken aufweist. Im Anschlußblock verlaufen elektrische Versorgungs- und/oder Steuerleitungen, wobei eine mit diesen Leitungen verbundene Steckvorrichtung an denjenigen Seiten des Anschlußblocks angeordnet ist, die beim Verbinden mit weiteren Anschlußblöcken mit entsprechenden Seiten derselben in Anlage gelangen. Darüber hinaus sind elektrische Verbindungsmittel für die Leitungen im Anschlußblock mit elektrischen Anschlüssen des wenigstens einen Betätigungsblocks vorgesehen. Hierdurch entfällt eine Verkabelung der Ventileinheit auch bei mehreren, in Reihen zusammengesteckten Ventileinheiten, da beim Zusammenstecken automatisch auch die elektrischen Verbindungen hergestellt werden.

Aus der DE 43 12 757 A1 geht eine elektronische Steuereinrichtung für eine modulartig aufgebaute Ventilstation hervor, bei der eine Steuereinheit mit Modulen über ein Busleitungssystem verbunden ist und jedes Modul einen programmierbaren Adreßdecoder aufweist, wobei Mittel zur sequentiellen Konfigurierung der Module und zur automatischen Zuweisung von individuellen Adressen für die einzelnen Module vorgesehen sind. Hierdurch kann die Ventilstation beliebig aufgebaut oder erweitert werden, wobei die angeschlossenen Module automatisch erkannt und mit Adressen versehen werden.

Derartige Ventileinheiten, auch Ventilinseln genannt, bei denen mehrere Ventile baulich als eine Einheit angeordnet sind und die mit einem elektrischen Zentralstecker (Multipol) oder einem Feldbusinterface mit entsprechenden digitalen Ausgängen versehen sind, stellen Standardbaugruppen in der Automatisierungstechnik dar. Insbesondere im Sondermaschinenbau werden solche modular aufgebaute Systeme eingesetzt, bei denen die Ventilfunktion wie "Bausteine" aus immer gleichen Gruppen zusammengefügt werden können. Die Adressierung der einzelnen Module erfolgt durch elektrische Leitungen oder Bussysteme.

Aus der EP 1002961 A2 ist ein Verfahren zur Ansteuerung von elektrisch betätigten Schaltventilen bekannt geworden, bei dem die Signalübertragung zwischen den einzelnen elektrischen Modulen über Optokoppler erfolgt, die Teil einer von außen nicht zugänglichen elektrischen Schaltung sind. Die Ankopplung an einen Bus erfolgt durch eine Steckverbindung.

Nachteilig bei diesen bekannten Steuereinrichtungen, insbesondere für Ventilstationen ist das Vorhandensein von elektrischen Steckverbindungen, die nicht nur beispielsweise verbogen oder auf andere Weise beschädigt werden können, sondern beim Einsatz in pneumatischen Systemen sehr oft abgedichtet werden müssen und die zudem hohen mechanischen Toleranzanforderungen unterliegen.

Eine Aufgabe der vorliegenden Erfindung besteht daher darin, eine elektrische Steuereinrichtung zu vermitteln, die weitestgehend ohne elektrische Steckverbindungen auskommt.

Diese Aufgabe wird erfindungsgemäß durch eine Steuereinrichtung mit den Merkmalen des Anspruchs 1 gelöst.

Die erfindungsgemäße, modulartig aufgebaute Steuereinrichtung zur Ansteuerung wenigstens eines Ventilmoduls einer modulartig aufgebauten Ventilstation ermöglicht eine Datenübertragung zwischen den Ventilmodulen auf optischem Wege. Steckverbindungen sind nicht erforderlich. Damit können die im Zusammenhang mit Steckverbindungen auftretenden, zuvor geschilderten Probleme erst gar nicht entstehen.

Durch die in den Unteransprüchen aufgeführten Maßnahmen und Merkmale sind vorteilhafte Weiterbildungen und Verbesserungen der im Anspruch 1 angegebenen Steuereinrichtung möglich.

Das elektrische Modul kann auf die unterschiedlichste Art und Weise realisiert werden. Eine vorteilhafte Ausführungsform sieht vor, daß das wenigstens eine elektrische Modul wenigstens eine speicherprogrammierbare Steuerung umfaßt.

Dieses Ventilmodul weist vorzugsweise fluidische Kanäle auf, die mit entsprechenden fluidischen Kanälen eines anderen Ventilmoduls verbindbar sind und wenigstens ein elektrisch ansteuerbares Ventil aufweisen.

Bei einer vorteilhaften Ausführungsform ist vorgesehen, daß jedes elektrische Modul wenigstens ein optoelektronisches Sendemittel zum Senden eines Datensignals und wenigstens ein optoelektronisches Sendemittel zum Senden eines Steuersignals aufweist. Ferner weist jedes elektrische Modul wenigstens ein optoelektronisches Empfangsmittel zum Empfangen eines Datensignals und wenigstens ein optoelektronisches Empfangsmittel zum Empfangen eines Steuersignals auf. Auf diese Weise können zwei Signale, nämlich ein Datensignal (DATA-Signal) und ein Steuersignal (CLOCK-Signal) von jedem elektrischen Modul empfangen und an andere elektrische Module gesendet oder auch von einem zentralen Modul empfangen oder an dieses gesendet werden. Aufgrund lediglich dieser beiden Signale ist es dann möglich, mittels der elektrischen Module jeden elektrischen Verbraucher, z.B. jedes Ventilmodul anzusteuern.

Um Daten von den elektrischen Modulen wieder zurück, beispielsweise zu einem zentralen Steuermodul zu übertragen, kann bei einer vorteilhaften Ausführungsform vorgesehen sein, daß jedes elektrische Modul drei optische Übertragungskanäle und damit drei optoelektronische Empfangsmittel und drei optoelektronische Sendemittel aufweist. Neben einem optischen Kanal für ein Steuersignal ist dabei ein Kanal für den Empfang von Daten und ein Kanal für das Senden von Daten vorgesehen. Derartige Module werden beispielsweise in Verbindung mit einem Feldbusinterface eingesetzt, bei denen elektrisch ansteuerbare Einrichtungen, die sowohl Steuersignale empfangen als auch Signale an das Steuermodul senden, wie dies beispielsweise bei externen Ventilen, Positionssensoren oder dergleichen von beispielsweise Pneumatikzylindern der Fall ist.

Rein prinzipiell können die optoelektronischen Empfangsmittel und Sendemittel auf die unterschiedlichste Art und Weise ausgebildet sein. Eine vorteilhafte, da einfach und kostengünstig zu realisierende Ausführungsform sieht vor, daß die Sendemittel Fotodioden und die Empfangsmittel Fototransistoren sind.

Die Schaltungsanordnung ist vorzugsweise so ausgestaltet, daß eine sequentielle Verarbeitung und Weiterleitung der empfangenen/gesendeten Signale möglich ist. Hierdurch ist eine Übertragung der Signale nach dem Schieberegisterprinzip möglich, welches den Vorteil aufweist, daß keine Adressierung der einzelnen elektrischen Module notwendig ist. Wie nachfolgend noch näher beschrieben wird, bildet hierbei vielmehr die physikalische Position des elektrischen Moduls und damit auch des Ventilmoduls selbst die Adresse.

Die optische Datenübertragung ist verglichen mit leitungsgebundener Datenübertragung sehr störsicher. Darüber hinaus können aufwendige Maßnahmen für das Sicherstellen der elektromagnetischen Verträglichkeit entfallen. Die gesamte digitale Logik zur Abwicklung der seriellen Datenübertragung kann zudem über einen einfachen Single-Chip-Microcontroller oder einen programmierbaren Logikbaustein realisiert werden.

Bei einer vorteilhaften Ausführungsform ist neben der kontaktlosen Übertragung der Steuersignale auch eine kontaktlose Energieübertragung dadurch vorgesehen, daß in jedem elektrischen Modul kontaktlose Energieübertragungsmittel zur Energieversorgung der Ventile angeordnet sind.

Diese kontaktlosen Energieübertragungsmittel werden bei einer vorteilhaften Ausführungsform aus einem in dem zentralen Steuermodul angeordneten ersten Eisenkernelement mit einer Primärwicklung und aus, in den elektrischen Modulen angeordneten, jedem Ventil zugeordneten zweiten Eisenkernelementen mit Sekundärwicklungen und Gleichrichtern gebildet, wobei das erste Eisenkernelement und eines oder mehrere der zweiten Eisenkernelemente einen geschlossenen Eisenkern zur kontaktlosen induktiven Spannungsversorgung der Ventile bilden.

Die in den elektrischen Modulen angeordneten zweiten Eisenkernelemente sind zum einen als Durchgangselemente, zum anderen als Abschlußelemente ausgebildet.

Weitere Vorteile und Merkmale der Erfindung sind Gegenstand der nachfolgenden Beschreibung sowie der zeichnerischen Darstellung von Ausführungsbeispielen.

In der Zeichnung zeigen:
- Fig. 1: schematisch eine modulartig aufgebaute Ventilstation, bei der eine erfindungsgemäße elektrische Steuereinrichtung vorgesehen ist;
- Fig. 2: schematisch die Darstellung der übertragenen Datensignale;
- Fig. 3: schematisch zwei elektrische Module einer anderen Ausführungsform der Erfindung und
- Fig. 4: schematisch eine Ventilstation mit kontaktlosen Energieübertragungsmitteln gemäß einer weiteren Ausführungsform der Erfindung.

Eine als Ganze mit 100 bezeichnete Ventilstation weist ein zentrales Steuermodul 200 auf, an das mehrere, gleich ausgebildete elektrische Module 300 angeschlossen sind. Jedes elektrische Modul 300 weist optoelektronische Empfangsmittel 310, 320 sowie optoelektronische Sendemittel 340, 350 auf, die an eine digitale Logikeinheit 370 angeschlossen sind, mittels der jeweils auf elektrischem Wege durch einen Antrieb mit einer Wicklung 380 in in einem Ventilmodul 500 angeordnetes Ventil 530 auf an sich bekannte Weise betätigbar ist. Das Ventilmodul 320 weist fluidische Kanäle zur Zuführung eines Fluids auf. Die elektrischen Module 300 weisen Steckkontakte 391, 392, 393, 394 auf, die der Energieversorgung dienen.

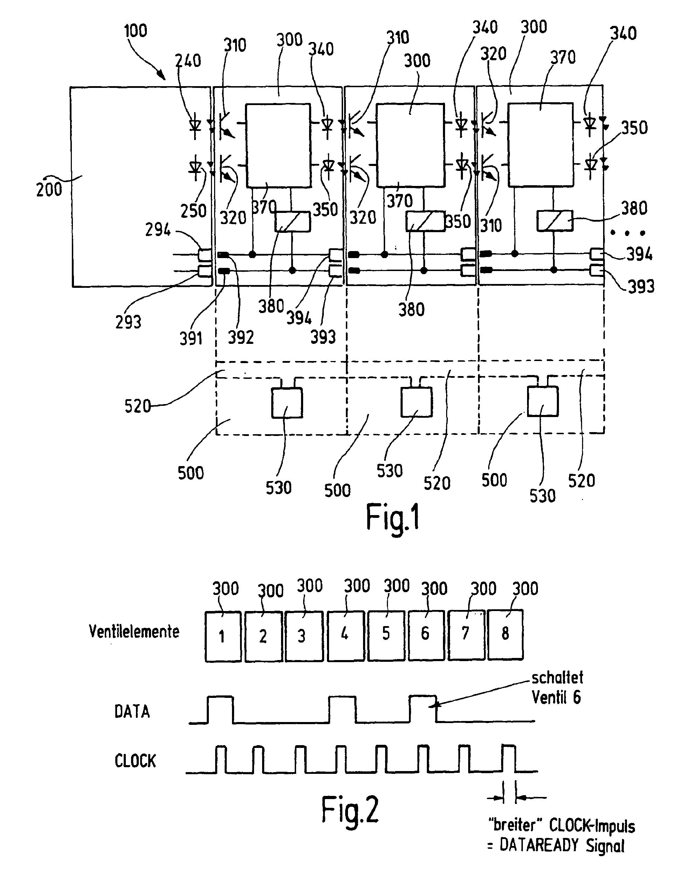

Wie in Fig. 1 dargestellt, kann jedes elektrische Modul 300 bausteinartig miteinander oder mit dem zentralen Steuermodul 200 verbunden werden. Das zentrale Steuermodul 200 weist hierzu ebenfalls optoelektronische Sendemittel 240, 250 sowie Steckkontakte 293, 294 für die Energieversorgung auf.

Die Signalübertragung von dem zentralen Steuermodul 200 zu den elektrischen Modulen 300 und zwischen den elektrischen Modulen 300 untereinander erfolgt optisch auf die nachfolgend beschriebene Weise. Jedes Modul 300 verfügt über zwei optoelektronische Empfangsmittel, die beispielsweise durch die in Fig. 1 dargestellten Fototransistoren 310, 320 zum Empfangen von seriellen Daten realisierbar sind, sowie über zwei optoelektronische Sendemittel, die beispielsweise durch die in Fig. 1 dargestellten Fotodioden 340, 350 zum Senden der Daten an das nächste elektrische Modul 300 realisiert werden können. Die gesamte modulartig aufgebaute Ventilstation 100 stellt hinsichtlich der Schaltungslogik ein Schieberegister dar mit zwei optischen Kanälen, die jeweils durch einander zugeordnete Sende- und Empfangsmittel 240, 250; 340, 350 bzw. 310, 320 gebildet werden. Der eine optische Kanal dient der Übertragung des Datensignals, der andere optische Kanal dient der Übertragung eines Steuersignals.

In Fig. 2 ist schematisch die Signalübertragung anhand von acht elektrischen Modulen 300, denen in Fig. 2 jeweils Nummern 1 bis 8 zugeordnet sind, dargestellt. Sollen beispielsweise die elektrischen Module mit den Nummern 1, 4 und 6 die ihnen zugeordneten Ventile 530 schalten, so wird ein Steuersignal ("CLOCK") übertragen, welches acht zeitlich gleich beabstandete Rechteckimpulse umfaßt. Der letzte Rechteckimpuls ist geringfügig breiter ausgebildet und signalisiert auf diese Weise das Signalende, so daß für die Übertragung des sogenannten "DATA READY-Signals" kein zusätzlicher optischer Übertragungskanal notwendig ist. Es wird vielmehr das CLOCK-Signal auf diese Weise selbst kodiert. Dem CLOCK-Signal zugeordnet ist ein Datensignal ("DATA"), welches nur beim ersten, vierten und sechsten Rechteckimpuls des CLOCK-Signals einen Rechteckimpuls aufweist. Dieses Signal wird in den digitalen Logikeinheiten 370 der elektrischen Module 300 verarbeitet, wobei das erste, vierte und sechste elektrische Modul 300 jeweils den diesen zugeordneten Antrieb 380 schaltet und so das dem jeweiligen elektrischen Modul zugeordnete Ventil 530 betätigt.

Über das CLOCK-Signal wird demnach ein serieller Datenstrom in die einzelnen elektrischen Module 300 geschoben. Über das Signal "DATAREADY" werden die Informationen anschließend an die Spulen der elektromagnetischen Antriebe 380 weitergegeben. Dieses Schieberegisterprinzip weist den Vorteil auf, daß keine Adressierung der einzelnen elektrischen Module 300 notwendig ist. Die physikalische Position des elektrischen Moduls 300 ergibt automatisch die Adresse. Die optische Datenübertragung ist verglichen mit einer leitungsgebundenen Datenübertragung sehr störsicher. Darüber hinaus können aufwendige Maßnahmen für das Sicherstellen der elektromagnetischen Verträglichkeit entfallen

Die gesamte digitale Logik zur Abwicklung der seriellen Datenübertragung kann über einen einfachen Single-Chip-Microcontroller oder einen programmierbaren Logikbaustein realisiert werden.

Die elektrischen Module 300 können beispielsweise eine speicherprogrammierbare Steuerung (SPS) aufweisen, die in Verbindung mit beispielsweise einer Ventilinsel oder Modulen zur Eingabe und Ausgabe von Daten als Ersatz für einen drahtgebundenen Bus zur Kommunikation mit dem zentralen Steuermodul 200, das beispielsweise eine CPU enthalten kann, vorgesehen ist. Dabei können auch einzelne oder mehrere derartig verkettete Module 300 mit oder ohne Verbindung zu weiteren elektrisch ansteuerbaren mechanischen oder elektrischen Einrichtungen möglich sein.

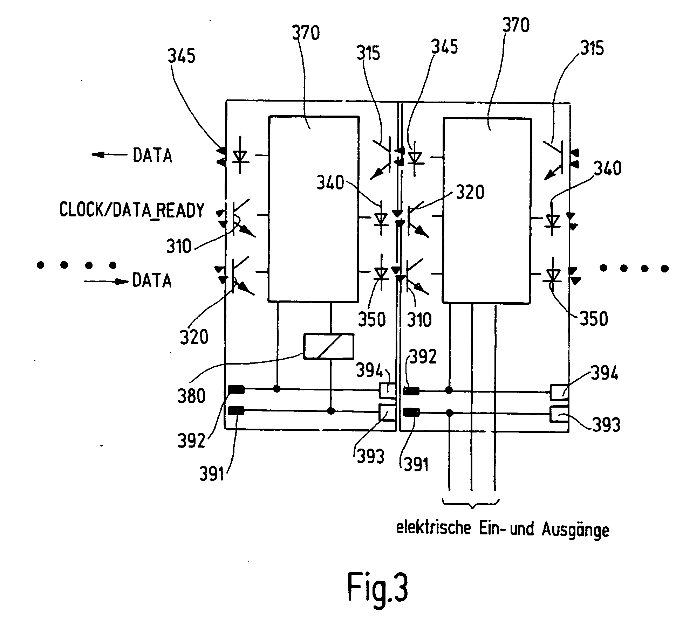

Bei der in Fig. 3 dargestellten Ausführungsform sind gleiche Merkmale mit den gleichen Bezugszeichen wie bei der in Fig. 1 dargestellten Ausführungsform dargestellt, so daß bezüglich deren Beschreibung vollinhaltlich auf die vorstehenden Ausführungen Bezug genommen wird.

Die in Fig. 3 dargestellten elektrischen Module 300 weisen gegenüber dem in Fig. 1 dargestellten Modulen 300 ein weiteres optoelektronisches Sendemittel 345 in Form einer Fotodiode und ein dieser zugeordnetes weiteres optoelektronisches Empfangsmittel 315 in Form eines Fototransistors auf, die einen weiteren, dritten optischen Kanal bilden. Dieser Kanal dient der Ausgabe von Daten. Derartige elektrische Module 300 können beispielsweise in Ventilstationen eingesetzt werden, die ein Feldbusinterface aufweisen und die oft auch mit zusätzlichen elektrischen Ein- und Ausgängen versehen sind, zum Beispiel zum Anschluß von externen Ventilen oder Positionssensoren von Pneumatikzylindern oder dergleichen. Durch den dritten Kanal ist eine Kommunikation mit dem zentralem Steuermodul 200 und/oder mit anderen Modulen 300 möglich.

In Fig. 1 und Fig. 3 ist jeweils nur ein elektrischer Antrieb 380 in Form einer Spule dargestellt. Es versteht sich, daß die Erfindung nicht auf diese Ausführungsform beschränkt ist, sondern vielmehr auch zwei Antriebe, insbesondere zwei Spulen oder mehr als zwei Spulen/Antriebe vorgesehen sein können.

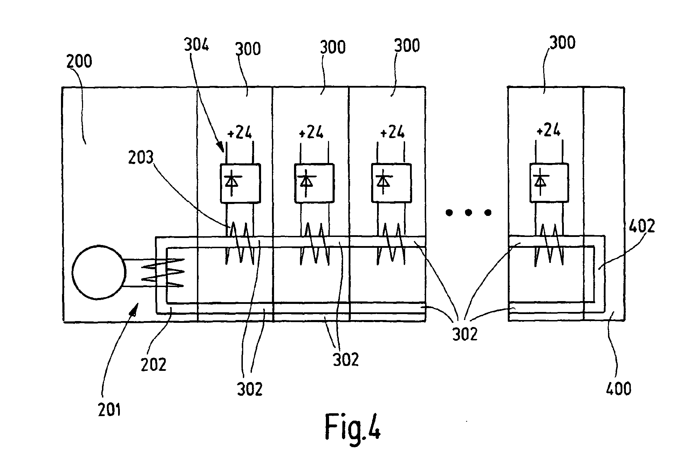

Bei einem weiteren, in Fig. 4 dargestellten Ausführungsbeispiel ist neben der vorbeschriebenen kontaktlosen Signalübertragung auch eine kontaktlose Energieversorgung vorgesehen. Der Übersichtlichkeit halber wurden in Fig. 4 die in Fig. 1 und 3 dargestellten optischen Signalübertragungskanäle weggelassen, es ist nur der kontaktlose Energieübertragungsweg dargestellt, der nachfolgend näher beschrieben wird.

In dem zentralen Steuermodul 200 ist ein erstes Eisenkernelement 202 mit einer Primärwicklung 201 vorgesehen. In jedem elektrischen Modul 300 ist ein auf dieses erste Eisenkernelement 202 angepaßtes, weiteres Eisenkern- oder Ferritkernelement 302 vorgesehen mit jeweils einer Sekundärwicklung 303 sowie einem Gleichrichter 304. Zum Schließen des Eisenkreises ist in einem Abschlußelement 400 ein Eisenkernabschlußelement 402 angeordnet. Die Primärwicklung 201 dient nun zur Einspeisung einer Wechselspannung, die über die Sekundärwicklungen 203 in jedem der elektrischen Module 300 abgegriffen wird und mittels der Gleichrichter 304 gleichgerichtet wird. Die Energieübertragung erfolgt somit auf induktivem Wege, ohne daß Steckkontakte notwendig sind. Die Eisenkreiselemente 202, 302 und 402 sind vollständig in dem Steuermodul 200, in den elektrischen Modulen 300 und in dem Abschlußelement 400 integriert, beispielsweise vergossen.

Vorstehend wurde exemplarisch eine elektrische Steuereinrichtung für eine Ventilstation oder Ventilinsel beschrieben. Es versteht sich jedoch, daß die Erfindung nicht auf den Einsatz in einer Ventilstation oder Ventilinsel beschränkt ist, sondern vielmehr auch in anderen Gebieten der Technik eingesetzt werden kann, beispielsweise in der Gebäudeautomation, in der ebenfalls eine Vielzahl von elektrischen Einrichtungen, die gewissermaßen modulartig aufgebaut sind, angesteuert werden müssen.

## Patentansprüche

1. Elektrische Steuereinrichtung umfassend wenigstens ein elektrisches Modul (300) zur Ansteuerung wenigstens eines Ventilmoduls (500) einer modulartig aufgebauten Ventilstation, wobei das wenigstens eine elektrische Modul (300) Mittel zum Verbinden mit weiteren elektrischen Modulen (300) aufweist, **dadurch gekennzeichnet, daß** die Mittel zum Verbinden mit weiteren elektrischen Modulen (300) wenigstens ein optoelektronisches Sende- und Empfangsmittel (310, 315, 320, 340, 345, 350) ist und daß jedes elektrische Modul (300) eine Schaltungsanordnung (370) zur Verarbeitung und Weiterleitung der empfangenen optoelektronischen Signale und zur Ansteuerung des wenigstens einen elektrischen Ventilmoduls aufweist.

2. Steuereinrichtung nach Anspruch 1, **dadurch gekennzeichnet, daß** die Schaltungsanordnung (370) eine speicherprogrammierbare Steuerung (SPS) aufweist.

3. Steuereinrichtung nach Anspruch 1, **dadurch gekennzeichnet, daß** das Ventilmodul fluidische Kanäle (520), die mit entsprechenden fluidischen Kanälen eines anderen Ventilmoduls (500) verbindbar sind, und wenigstens ein elektrisch ansteuerbares Ventil aufweist.

4. Steuereinrichtung nach einem der vorstehenden Ansprüche, **dadurch gekennzeichnet, daß** jedes elektrische Modul (300) wenigstens ein optoelektronisches Sendemittel (345, 350) zum Senden eines Datensignals und wenigstens ein optoelektronisches Sendemittel (340) zum Senden eines Steuersignals aufweist.

5. Steuereinrichtung nach einem der Ansprüche 1 bis 4, **dadurch gekennzeichnet, daß** jedes elektrische Modul (300) wenigstens ein optoelektronisches Empfangsmittel (315, 320) zum Empfang eines Datensignals und wenigstens ein optoelektronisches Empfangsmittel (310) zum Empfang eines Steuersignals aufweist

6. Steuereinrichtung nach einem der Ansprüche 1 bis 5, **dadurch gekennzeichnet, daß** die Sendemittel Fotodioden (340, 345, 350) sind.

7. Steuereinrichtung nach einem der Ansprüche 1 bis 6, **dadurch gekennzeichnet, daß** die Empfangsmittel Fototransistoren (310, 315, 320) sind.

8. Steuereinrichtung nach einem der Ansprüche 1 bis 7, **dadurch gekennzeichnet, daß** die Schaltungsanordnung (370) zur sequentiellen Verarbeitung und Weiterleitung der empfangenen Signale ausgebildet ist.

9. Steuereinrichtung nach einem der Ansprüche 1 bis 8, **dadurch gekennzeichnet, daß** in jedem elektrischen Modul (300) kontaktlose Energieübertragungsmittel (302, 303) zur Energieversorgung vorgesehen sind.

10. Steuereinrichtung nach Anspruch 9, **dadurch gekennzeichnet, daß** die kontaktlosen Energieübertragungsmittel gebildet sind aus einem in dem Steuermodul (200) angeordneten ersten Ferrit- oder Eisenkernelement (202) mit einer Primärwicklung (203) und aus jedem elektrischen Modul zugeordneten zweiten Ferrit- oder Eisenkernelementen (302) mit Sekundärwicklungen (303) und Gleichrichtern (304), wobei das erste Ferrit- oder Eisenkernelement (202) und eines oder mehrere der zweiten Ferrit- oder Eisenkernelemente (302) einen Ferrit- oder Eisenkern zur induktiven Energieversorgung bilden.

11. Steuereinrichtung nach Anspruch 9 oder 10, **gekennzeichnet durch** ein Ferrit- oder Eisenkernabschlußelement (402), **durch** welches der Ferrit- oder Eisenkreis geschlossen wird.

## Claims

1. Electrical control device, comprising at least one electrical module (300) for the actuation of at least one valve module (500) of a valve station of module-like structure, the at least one electrical module (300) having means for connection to further electrical modules (300), **characterised in that** the means for the connection to further electrical modules (300) is at least one opto-electronic transmitting and receiving means (310, 315, 320, 340, 345, 350), and **in that** every electrical module (300) has a circuit arrangement (370) for the processing and forwarding of the opto-electronic signals received and for actuating the at least one electrical valve module.

2. Control device according to Claim 1, **characterised in that** the circuit arrangement (370) has a memory-programmable control unit (SPS).

3. Control device according to Claim 1, **characterised in that** the valve module has fluidic channels (520), which can be connected to corresponding fluidic channels of another valve module (500), and at least one electrically actuatable valve.

4. Control device according to any one of the preceding Claims, **characterised in that** each electrical module (300) has at least one opto-electronic transmitting means (345, 350) for sending a data signal and at least one opto-electronic transmitting means (340) for sending a control signal.

5. Control device according to any one of Claims 1 to 4, **characterised in that** each electrical module (300) has at least one opto-electronic receiving means (315, 320) for the reception of a data signal and at least one opto-electronic receiving means (310) for the reception of a control signal.

6. Control device according to any one of Claims 1 to 5, **characterised in that** the transmitting means are photodiodes (340, 345, 350).

7. Control device according to any one of Claims 1 to 6, **characterised in that** the receiving means are phototransistors (310, 315, 320).

8. Control device according to any one of Claims 1 to 7, **characterised in that** the circuit arrangement (370) is designed for the sequential processing and forwarding of the signals received.

9. Control device according to any one of Claims 1 to 8, **characterised in that** contactless energy transfer means (302, 303) are provided in each electrical module (300) for the energy supply.

10. Control device according to Claim 9, **characterised in that** the contactless energy transfer means are formed from a first ferrite core or iron core element (202) arranged in the control module (200), with a primary winding (203) and from a second ferrite core or iron core element (302) allocated to each electrical module, with secondary windings (303) and rectifiers (304), wherein the first ferrite core or iron core element (202) and one or more of the second ferrite core or iron core elements (302) form a ferrite core or iron core for the inductive energy supply.

11. Control device according to Claim 9 or 10, **characterised by** a ferrite core or iron core termination element (402), by means of which the ferrite or iron circuit is closed.

## Revendications

1. Dispositif de commande électrique comprenant au moins un module électrique (300) pour commander au moins un module de soupape (500) d'une station de soupape modulaire, au moins un module électrique (300) présentant des moyens de liaison avec d'autres modules électriques (300),
**caractérisé en ce que**
les moyens de liaison avec d'autres modules électriques (300) comprennent au moins un émetteur/et récepteur optoélectroniques (310, 315, 320, 340, 345, 350), et chaque module électrique (300) présente un circuit (370) pour le traitement et la transmission des signaux optoélectroniques reçus et pour la commande d'au moins un module de soupape électrique.

2. Dispositif de commande électrique selon la revendication 1,
**caractérisé en ce que**
le circuit (370) présente une commande (SPS) à mémoire programmable.

3. Dispositif de commande selon la revendication 1,
**caractérisé en ce que**
le module de soupape présente des canaux fluidiques (520) qui peuvent être reliés à des canaux fluidiques correspondants d'un autre module de soupape (500), et au moins une soupape commandée électriquement.

4. Dispositif de commande selon l'une quelconque des revendications précédentes,
**caractérisé en ce que**
chaque module électrique (300) présente au moins un émetteur optoélectronique (345, 350) pour émettre un signal de données et au moins un émetteur optoélectronique (340) pour émettre un signal de commande.

5. Dispositif de commande selon l'une quelconque des revendications 1 à 4,
**caractérisé en ce que**
chaque module électrique (300) présente au moins un récepteur optoélectronique (315, 320) pour recevoir un signal de donnée et au moins un récepteur optoélectronique (310) pour recevoir un signal de commande.

6. Dispositif de commande selon l'une quelconque des revendications 1 à 5,
**caractérisé en ce que**
les émetteurs sont des photodiodes (340, 345, 350).

7. Dispositif de commande selon l'une quelconque des revendications 1 à 6,
**caractérisé en ce que**
les récepteurs sont des phototransistors (310, 315, 320).

8. Dispositif de commande selon l'une quelconque des revendications 1 à 7,
**caractérisé en ce que**
le circuit (370) est conçu pour le traitement séquentiel et la transmission des signaux reçus.

9. Dispositif de commande selon l'une quelconque des revendications 1 à 8,
**caractérisé par**
des moyens de transmission d'énergie (302, 303) dans chaque module électrique (300) pour l'alimentation en énergie.

10. Dispositif de commande selon la revendication 9,
**caractérisé en ce que**
les moyens de transmission d'énergie sans contact comprennent un premier élément ferrite ou d'un noyau de fer (202) disposé dans le module de commande (200) et muni d'un bobinage primaire (203), et des seconds éléments ferrites ou de noyau de fer (302) munis de bobinages secondaires (303) et de redresseurs (304), le premier élément ferrite ou noyau de fer (202) et un ou plusieurs seconds éléments ferrites ou noyaux de fer (302) formant un noyau ferrite ou de fer pour l'alimentation inductive en énergie.

11. Dispositif de commande selon la revendication 9 ou 10,
**caractérisé par**
un élément ferrite ou de noyau de fer terminal (402) qui ferme le circuit de ferrite ou de fer.
